# EUROPEAN PATENT APPLICATION

(11) **EP 2 833 470 A1**
(43) Date of publication of application: **04.02.2015**
(21) Application number: 12872718.7
(22) Date of filing: 20.12.2012
(51) Int. Cl.: H01M 10/42, H01M 2/10

(54) **INTERLOCKING DEVICE FOR BATTERY UNIT BOARD**

(30) Priority: 29.03.2012 JP 2012078373
(71) Applicant: Kabushiki Kaisha Toshiba, Minato-ku Tokyo 105-8001 (JP)
(72) Inventor: KAWANA, Shigenori, Tokyo 1058001 (JP); KIKUCHI, Shuji, Tokyo 1058001 (JP); KAWASHIMA, Sakae, Tokyo 1058001 (JP); MATSUNO, Yosuke, Tokyo 1058001 (JP)
(74) Representative: Ekstedt, Måns
(86) International application number: PCT/JP2012/008153
(87) International publication number: WO 2013/145058

(57) **Abstract**

[PROBLEM]

When a switch is opened, an interlocking is performed by which battery units stacked in multiple stages can be removed.

[MEANS FOR SOLVING]

The present invention is characterized by including a housing 1; battery units 4 that are stacked in multiple stages in the housing 1; a switch 2 that is connected to a DC circuit in which the battery units 4 are connected in series; and an interlocking mechanism that allows the movement of the battery units 4 when the switch 2 is opened, and that inhibits the movement of the battery units 4 when the switch 2 is closed, the interlocking mechanism including a handle contact portion 7b that is in contact with an operation handle 5, and a battery contact portion 7c that is in contact with a bottom surface of the battery unit 4.

## Description

### TECHNICAL FIELD

The present invention relates to an interlocking device for a battery unit board that stores a battery unit and includes a switch opening and closing a DC circuit.

### BACKGROUND ART

Conventionally, a switch that opens and closes a DC circuit is connected to a battery unit board storing a battery unit (battery module) in which plural battery cells are connected in series (for example, see Patent Document 1).

For checking the battery unit board described above, a front plate or a side plate is removed to check discoloration or damage of the battery units that are stacked in multiple stages. For the battery unit that needs to be exchanged, a switch is opened, the battery unit is removed from a connection conductor, and the battery unit is exchanged. However, there may be a case in which the battery unit is removed without opening the switch. In view of this, an interlocking device between the switch and the battery unit with a simple configuration has been demanded.

### PRIOR ART DOCUMENT

### PATENT DOCUMENT

Patent Document 1: Japanese Patent Disclosure (Kokai) P2009-104808

### SUMMARY OF THE INVENTION

### PROBLEM TO BE SOLVED BY THE INVENTION

A problem to be solved by the present invention is to provide an interlocking device for a battery unit board that can allow predetermined battery units, which are stacked in multiple stages, to be removed, when a switch is opened.

### MEANS FOR SOLVING THE PROBLEM

In order to solve the above problem, an interlocking device for a battery unit board according to an embodiment includes: a housing; battery units that are stacked in multiple stages in the housing; a switch that is connected to a DC circuit to which the battery units are connected in series; and an interlocking mechanism that allows the movement of the battery units when the switch is opened, and that inhibits the movement of the battery units when the switch is closed.

### EFFECT OF THE INVENTION

According to the interlocking device for the battery unit board of the present invention, the predetermined battery units that are stacked in the multiple stages can be removed, and connected with a simple configuration, when the switch is opened.

### BRIEF DESCRIPTION OF THE DRAWINGS

FIG. 1 is a diagram illustrating an electric circuit of a battery unit board according to a first embodiment of the present invention.
FIG. 2 is a front view illustrating a configuration of an interlocking device for the battery unit board according to the first embodiment of the present invention.
FIG. 3 is a front view for describing an operation of the interlocking device for the battery unit board according to the first embodiment of the present invention.
FIG. 4 is a front view illustrating an essential part in a configuration of an interlocking device for the battery unit board according to a second embodiment of the present invention.
FIG. 5 is a backside view illustrating an essential part of a configuration of an interlocking device for the battery unit board according to a third embodiment of the present invention.

### EMBODIMENTS TO PRACTISE THE INVENTION

Embodiments of the present invention will be described below with reference to the drawings.

### FIRST EMBODIMENT

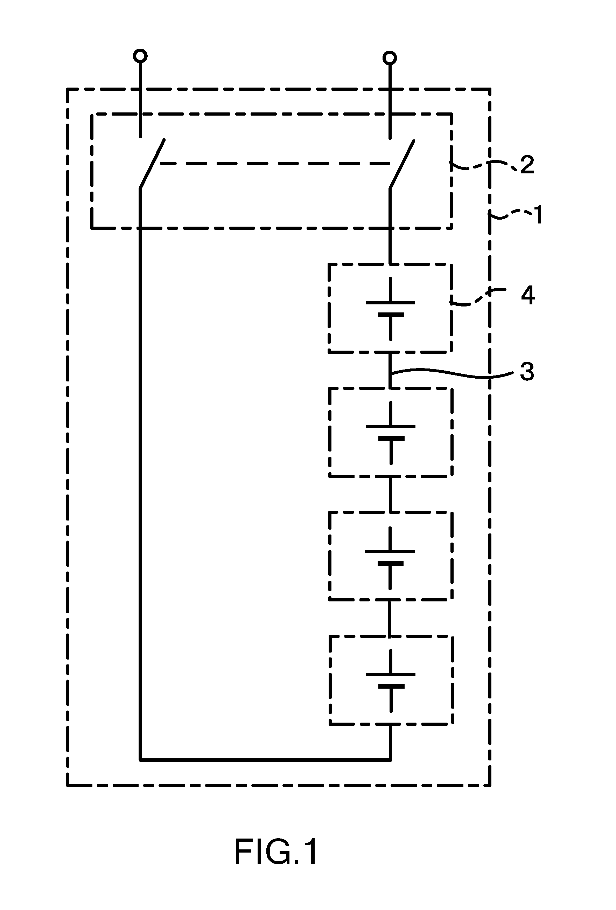

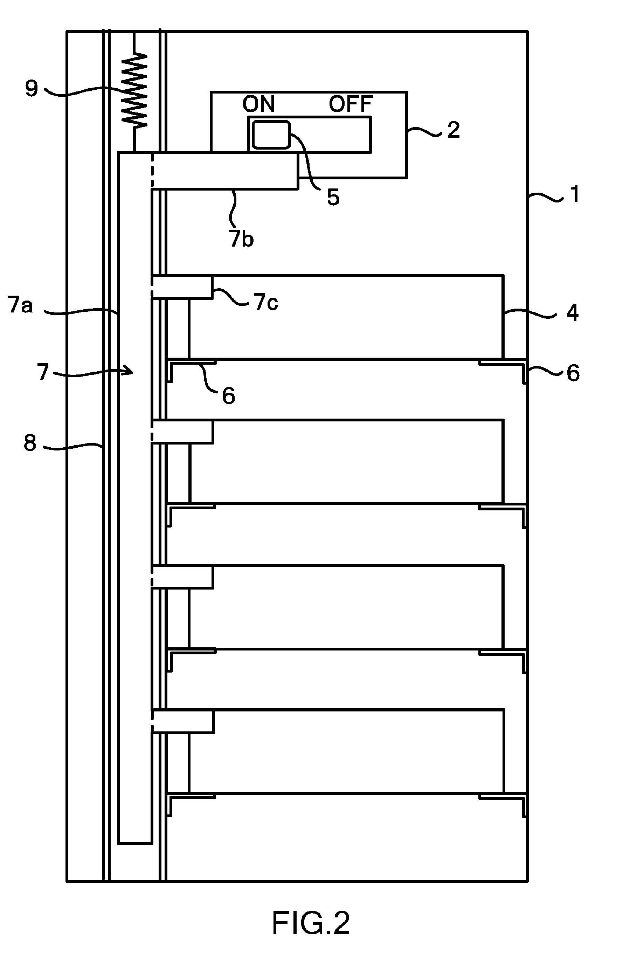

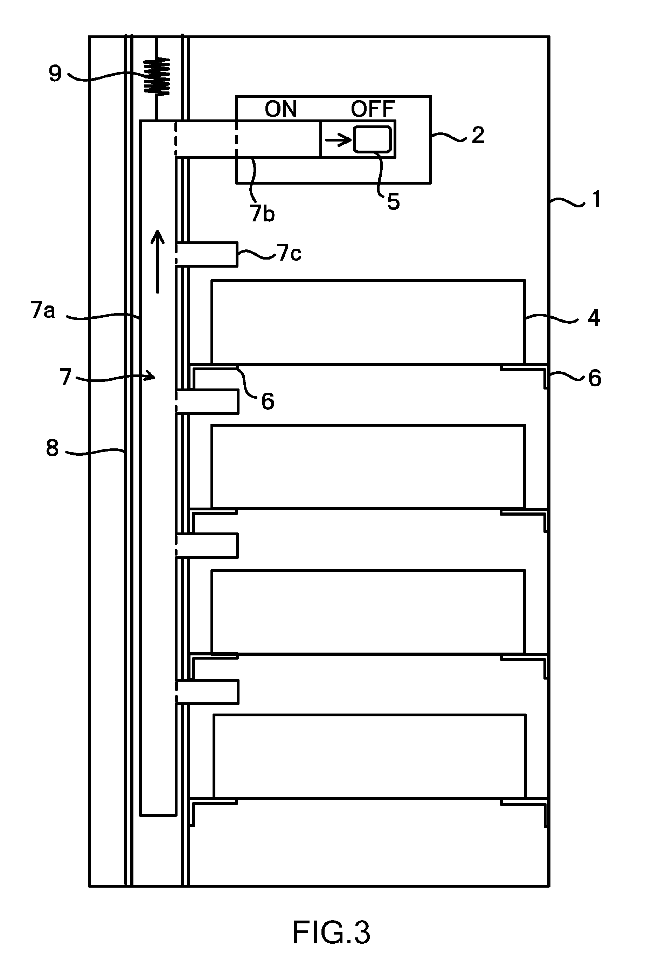

Firstly, an interlocking device for a battery unit board according to a first embodiment of the present invention will be described with reference to FIGS. 1 to 3. FIG. 1 is a diagram illustrating an electric circuit of a battery unit board according to the first embodiment of the present invention, FIG. 2 is a front view illustrating a configuration of the interlocking device for the battery unit board according to the first embodiment of the present invention, and FIG. 3 is a front view for describing an operation of the interlocking device for the battery unit board according to the first embodiment of the present invention.

As illustrated in FIG. 1, plural battery units 4 that are connected to a switch 2 in series with a connection conductor 3 are stored in a housing 1. The switch 2 is connected to an output side of the DC circuit formed by the battery units 4 for opening and closing an external circuit. Plural battery cells are connected in series in each of the battery units 4.

As illustrated in FIG. 2, the switch 2 is mounted at an upper side of the housing 1. An operation handle 5 that is movable in a horizontal direction for performing an open/close operation is provided to the switch 2. The battery units 4 are stacked in multiple stages in the vertical direction below the switch 2, and placed on a pair of L-shaped placing plates 6 provided on a side face. The battery units 4 can be drawn in the near direction of the sheet surface.

An interlocking plate 7 is provided at the left side of the housing 1. The interlocking plate 7 is disposed in the vertical direction, and includes a base portion 7a that is movable on a guide 8 in the vertical direction, a horizontally arranged handle contact portion 7b that is consecutively provided at the upper part of the base portion 7a and that is in contact with the operation handle 5, and battery contact portions 7c that are provided downward from the middle part of the base portion 7a in multiple stages and that are in contact with the bottom surfaces of the battery units 4. A spring 9 that biases the interlocking plate 7 in the vertical direction is provided between the base portion 7a and the ceiling portion of the housing 1.

Next, an operation of the interlocking plate 7 will be described with reference to FIG. 3.

As illustrated in FIG. 3, when the operation handle 5 is moved to the right for opening the switch 2, the operation handle 5 is detached from the handle contact portion 7b. When a lock pin that is not illustrated and that fixes the interlocking plate 7 to a fixing member of the housing 1 is released, the base portion 7a can be moved upward with spring force of the spring 9. Simultaneously, the battery contact portions 7c also move upward, and are detached from the bottom surfaces of the battery units 4.

With this configuration, the movement of the interlocking plate 7 is restricted according to the position of the operation handle 5, and when the switch 2 is opened, the battery contact portion 7c that hinders the drawing direction of the battery unit 4 can be released. Accordingly, the battery unit 4 that needs to be exchanged can be removed, and a new battery unit can be connected. After the exchange, the interlocking plate 7 is moved downward, the lock pin is set, and then, the operation handle 5 is operated.

The interlocking plate 7 is referred to as an interlocking mechanism that allows the movement of the battery unit 4 when the switch 2 is opened, and that inhibits the movement of the battery unit 4 when the switch 2 is closed.

According to the interlocking device for a battery unit board according to the first embodiment, the interlocking plate 7 that can be moved when the operation handle 5 of the switch 2 is opened is provided. Therefore, the battery unit 4 can be removed, and can be connected with the DC circuit being shut down. The interlocking device also provides an interlocking with simple configuration.

In the above first embodiment, the movement of the battery unit 4 is restricted with a mechanical interlocking. A display device or an alarm device that receives an electric supply from the switch 2 can issue an alarm signal such as a flickering display or an alarm sound when the front plate or the like of the housing 1 is removed with the switch 2 being closed. The power source system has a simple circuit, since it is in interlocking with the switch 2.

### SECOND EMBODIMENT

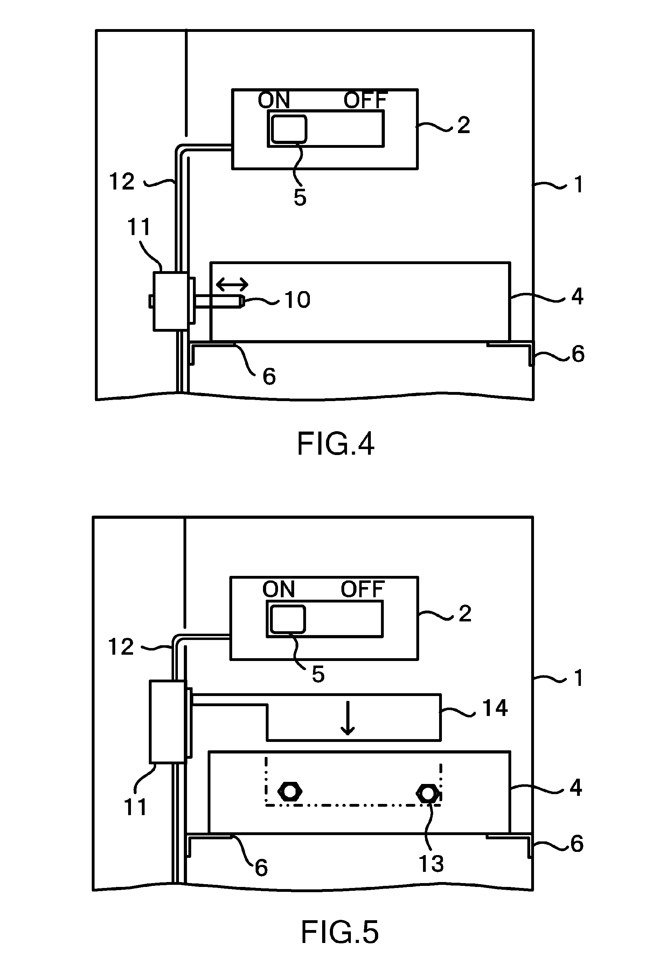

Next, an interlocking device for a battery unit board according to a second embodiment of the present invention will be described with reference to FIG. 4. FIG. 4 is a front view illustrating an essential part in a configuration of an interlocking device for a battery unit board according to the second embodiment of the present invention. The different point between the second embodiment and the first embodiment is that the second embodiment provides an electric interlocking. In FIG. 4, the components similar to those in the first embodiment are identified by the same reference numerals, and the detailed description thereof will be skipped.

As illustrated in FIG. 4, the interlocking device includes an electromagnetic operation mechanism 11 having a locking rod 10 that moves in a horizontal direction. The electromagnetic operation mechanism 11 receives an electric supply from the switch 2 with a control line 12. Thus, when the switch 2 is closed, the electromagnetic operation mechanism 11 operates, whereby the locking rod 10 is brought into contact with the bottom surface of the battery unit 4 to hinder the drawing direction. When the switch 2 is opened, the power supply of the electromagnetic operation mechanism 11 is lost, and non-excitation state is generated. Therefore, the locking rod 10 moves backward, whereby the battery unit 4 can be removed.

The locking rod 10 is referred to as an interlocking mechanism that allows the movement of the battery unit 4 when the switch 2 is opened, and that inhibits the movement of the battery unit 4 when the switch 2 is closed.

According to the interlocking device for a battery unit board according to the above second embodiment, the effect obtained by the first embodiment can also be obtained even by the electric interlocking.

### THIRD EMBODIMENT

Next, an interlocking device for a battery unit board according to a third embodiment of the present invention will be described with reference to FIG. 5. FIG. 5 is a backside view illustrating an essential part in a configuration of an interlocking device for a battery unit board according to the third embodiment of the present invention. The different point between the third embodiment and the second embodiment is that an electric interlocking is also provided to a terminal of the battery unit in the third embodiment. In FIG. 5, the components similar to those in the second embodiment are identified by the same reference numerals, and the detailed description thereof will be skipped.

As illustrated in FIG. 5, a terminal 13 of the battery unit 4 is provided on the back surface of the housing 1. An electromagnetic operation mechanism 11 having a shielding plate 14 that vertically moves is also provided. The terminal 13 is covered by the shielding plate 14 by the operation of the electromagnetic operation mechanism 11, when the switch 2 is closed. When the switch 2 is opened, the electromagnetic operation mechanism 11 becomes a non-excitation state, whereby the terminal 13 is released.

According to the interlocking device for a battery unit board according to the above third embodiment, the effect obtained by the second embodiment can be obtained, and further, a connection operation can be carried out at the side of the terminal 13 of the battery unit 4, when the switch 2 is opened.

According to the embodiments described above, predetermined battery units that are stacked in multiple stages can be removed, and connected with a simple configuration, when the switch is opened.

While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### DESCRIPTION OF THE REFERENCE NUMERALS

- 1: HOUSING
- 2: SWITCH
- 3: CONNECTION CONDUCTOR
- 4: BATTERY UNIT
- 5: OPERATION HANDLE
- 6: PLACING PLATE
- 7: INTERLOCKING PLATE
- 7a: BASE PORTION
- 7b: HANDLE CONTACT PORTION
- 7c: BATTERY CONTACT PORTION
- 8: GUIDE
- 9: SPRING
- 10: LOCKING ROD
- 11: ELECTROMAGNETIC OPERATION MECHANISM
- 12: CONTROL LINE
- 13: TERMINAL
- 14: SHIELDING PLATE

## Claims

1. An interlocking device for a battery unit board comprising:
a housing;
a battery unit that is arranged in the housing;
a switch that is electrically connected to the battery unit; and
an interlocking mechanism that allows the movement of the battery unit when the switch is opened, and that inhibits the battery unit from being drawn from the housing when the switch is closed.

2. The interlocking device for a battery unit board according to claim 1, wherein
the interlocking mechanism includes an interlocking plate whose movement is inhibited according to a position of an operation handle of the switch, wherein
when the switch is closed, a battery contact portion of the interlocking plate is in contact with a bottom surface of the battery unit in a drawing direction, and
when the switch is opened, the battery contact portion is released from the bottom surface.

3. The interlocking device for a battery unit board according to claim 1, wherein
the interlocking mechanism includes an electromagnetic operation mechanism that receives an electric supply from the switch, and a locking rod that operates with the electromagnetic operation mechanism, wherein
when the switch is closed, the electromagnetic operation mechanism operates to bring the locking rod into contact with a bottom surface of the battery unit in a drawing direction, and
when the switch is opened, the electromagnetic operation mechanism becomes a non-excitation state, and the locking rod is released from the bottom surface.

4. The interlocking device for a battery unit board according to claim 1, wherein
the interlocking mechanism includes an electromagnetic operation mechanism that receives an electric supply from the switch, and a shielding plate that operates with the electromagnetic operation mechanism, wherein
when the switch is closed, the electromagnetic operation mechanism operates to cover a terminal of the battery unit by the shielding plate, and
when the switch is opened, the electromagnetic operation mechanism becomes a non-excitation state, and the shielding plate is released from the terminal.

5. The interlocking device for a battery unit board according to any one of claims 1 to 4, wherein
a device that receives an electric supply from the switch issues an alarm signal, when the housing is opened.

6. The interlocking device for a battery unit board according to any one of claims 1 to 5, wherein
the battery units are stacked in the housing in multiple stages, and the battery units are connected in series.
